# EUROPEAN PATENT APPLICATION

(11) **EP 4 636 872 A1**
(43) Date of publication of application: **22.10.2025**
(21) Application number: 24170323.0
(22) Date of filing: 15.04.2024
(51) Int. Cl.: H01M 8/04119, H01M 8/0438

(54) **METHOD AND SYSTEM FOR PURGING A FUEL CELL**

(71) Applicant: GKN Hydrogen GmbH, 53177 Bonn (DE)
(72) Inventor: Beltrami, Luca, 39012 Meran (IT); Zagler, Georg, 39042 Brixen (IT)
(74) Representative: WBH Wachenhausen Patentanwälte PartG mbB

(57) **Abstract**

A method for purging a fuel cell (2) comprising at least one electrode (4; 6), a gas piping (7) in fluid connection with the at least one electrode (4; 6), and a purging device (10) for purging the at least one electrode (4; 6) is described. The method includes the steps of determining (S1) a pressure value of a gas at the gas piping (7); and controlling (S2) the purging device (10) based on the determined pressure value. Furthermore, a system for purging a fuel cell (2) is described, wherein the system comprises a gas piping (7) in fluid connection with the at least one electrode (4; 6), a purging device (10) for purging at least one electrode (4; 6), and a control unit (14), wherein the control unit (14) is configured to execute the steps of the previously described method. Furthermore, a fuel cell (2) with such a system and an energy supply device (1) with such a fuel cell (2) is described.

## Description

### Technical field

The present invention relates to a method for purging a fuel cell comprising at least one electrode, a gas piping, and a purging device for purging the at least one electrode. Further, the present invention relates to a system for purging a fuel cell, furthermore to a fuel cell comprising such a system and to an energy supply device comprising such a fuel cell.

### Background of the invention

During fuel cell operation, excess water and other contaminants present in the fuel cell, for instance crossed-over nitrogen in the anode of the fuel cell, may cause performance losses of the fuel cell and may damage the fuel cell. Purging the fuel cell, for instance the anode, with hydrogen removes water and other contaminants, and thus recovers the performance of the fuel cell and increases longevity of the fuel cell. For purging the fuel cell, a certain pressure of the hydrogen, with which the purging is performed, must be existent for a successful purging process. Below a certain inlet pressure threshold, the purging process may lead to low pressure at the fuel cell, which can result in performance loss and longevity issues of the fuel cell. Thus, purging methods and systems known from the prior art are executed above said certain pressure threshold, whereas below said certain pressure threshold, no sufficient purging process can be performed, leading to significant pressure loss at the fuel cell.

### Summary of the invention

A first aspect of the invention relates to a method for purging a fuel cell. A control unit may be configured to execute at least some or all steps of the method for purging the fuel cell. The steps of the method for purging the fuel cell may be executed cyclically, for instance in each cycle of the control unit.

The fuel cell comprises at least one electrode. For instance, the fuel cell comprises exactly two electrodes, an anode and a cathode. Further, the fuel cell comprises a gas piping in fluid connection with the at least one electrode. For instance, the gas piping is configured for supplying gas to the at least one electrode and/or for receiving gas from the at least one electrode. The gas piping may be provided externally to the electrode and/or the anode side of the fuel cell and/or at least one chamber of the fuel cell. The gas piping may comprise a gas supply which may supply gas to the fuel cell. The gas supply may comprise a hydrogen storage device, a valve, and piping. Alternatively, the gas supply may be connected to a hydrogen storage device. The gas piping may also comprise an outlet duct for removing gas from the fuel cell. The fuel cell further comprises a purging device for purging the at least one electrode. The purging device may be configured for purging exactly one electrode, or more than one electrode, for instance two or all electrodes of the fuel cell.

The method comprises a step of determining a pressure value of a gas at the gas piping. For instance, the step of determining the pressure value may be performed at an input or output of the gas supply. The step of determining the pressure value may comprise a step of determining a supply pressure value. The step of determining the supply pressure value may be performed at an input of the fuel cell. An output of the gas supply may be connected to an input of the electrode, for instance one chamber of the fuel cell, e.g. the anode side of the fuel cell. For instance, the step of determining the pressure value of the gas may be performed at an input of the anode side of the fuel cell, e.g. at the input of the electrode, and/or at a location of the gas piping upstream of the input of the electrode and/or of the anode side of the fuel cell. The gas may be hydrogen stored in the hydrogen storage device. The step of determining the pressure value may be performed at an output of the anode side of the fuel cell, e.g. at the output of the electrode, at a location of the gas piping downstream of the output of the electrode and/or of the anode side of the fuel cell.

The method further comprises a step of controlling the purging device based on the determined pressure value. The determined pressure value may be a control variable for controlling the purging device. By controlling the purging device, at least one electrode is purged with the gas. If the supply pressure value is used as pressure value, the gas for purging may be a supply gas. Purging the at least one electrode by controlling the purging device based on a first determined pressure value may be different from purging the at least one electrode by controlling the purging device based on a second determined pressure value, wherein the first and the second determined pressure values are different. Thus, for different determined pressure values, different purging procedures may be performed for purging the at least one electrode.

For instance, a first determined pressure value may be a higher pressure value than a second determined pressure value. With the aforementioned method, an adaptive and/or a variable purging of the fuel cell may be performed. Herein, purging also with a lower pressure at the gas piping, e.g., the gas supply, may be performed by the method as well as purging with a higher pressure at the gas piping. Thus, purging during low pressure fuel cell operation may be performed with this method. Purging of the fuel cell may prevent starvation of the fuel cell, and with this method, also during low pressure operation of the fuel cell. The purging process may entail a procedure to prevent fuel starvation of the fuel cell, and with this method, also during low pressure operation of the fuel cell. Excess of nitrogen, water, and other contaminants, for instance at the anode of the fuel cell, may otherwise decrease hydrogen concentration at a catalyst surface, thus reducing performance. Purging removes such water, nitrogen, and other contaminants and recovers the performance of the fuel cell. This purging and thus this recovery of the performance of the fuel cell may be done differently and based on the determined pressure value, thus enabling purging of the fuel cell for different pressure values. The method provides the possibility of combining different purging procedures by different controlling of the purging device based on different determined pressure values. This may increase performance of the fuel cell, reduce performance losses of the fuel cell due to starvation and reduce damage to the fuel cell. This may increase longevity of the fuel cell.

According to another embodiment, the method further comprises a step of comparing the determined pressure value with a pressure threshold. The pressure threshold may be a predefined and/or absolute pressure threshold. The pressure threshold may be a single value, multiple values or a function. The pressure threshold may be saved on a memory of the control unit. Controlling the purging device may be based on this comparison. For instance, by comparing the determined pressure value with the pressure threshold, it may be determined whether a high pressure drop purge or a low pressure drop purge may be executable. A high pressure drop purge may be a so-called normal purge. A low pressure drop purge may be a so-called adjusted purge. During controlling the purging device, the controlling may be based on whether a high pressure drop purge or a low pressure drop purge is executable. If a high pressure drop purge is executable, such a high pressure drop purge may be performed and executed by controlling the purging device. If such a high pressure drop purge is not executable and/or it has been determined that a low pressure drop purge may be executable, such a low pressure drop purge may be performed by controlling the purging device.

With such a method, a certain pressure threshold may be used for determining whether a high pressure drop purge or a low pressure drop purge may be executable. By performing the high pressure drop purge, a discontinuous purge may be performed for instance. By performing a low pressure drop purge, a continuous purge may be performed for instance. With this method, a combination of the two purging strategies may be executed based on a comparison of the determined pressure value with a pressure threshold.

According to another embodiment, determining the pressure value comprises determining pressure values at two different times. For instance, the step of determining a first pressure value may be performed at a first point in time, wherein determining a second pressure value may be performed at a second point in time. The first and the second points in time may be different. For instance, the first and the second points in time may be spaced by multiples of the cycle time of the control unit. The method further comprises a step of comparing the two pressure values determined at the two different times. The comparison may be a subtraction of one determined pressure value from the other determined pressure value. The step of controlling the purging device may comprise controlling the purging device based on this comparison. By such a comparison, a relative change of the determined pressure value may be used for controlling the purging device. For instance, if the determined pressure value drops by for instance 10 or 20% compared to a previously determined pressure value, the purging device may be controlled differently. For instance, when the determined pressure value drops by 10 or 20%, a low pressure drop purge may be performed instead of a high pressure drop purge.

According to another embodiment, the purging device comprises a purge valve. The purge valve may be adjustable. The purge valve may be one of a gate valve, a check valve, a globe valve, a ball valve and/or any other type of valve configured for providing an adjustable opening. The valve may be a combination of valve types, e.g., of the herein mentioned valve types. The step of controlling the purging device comprises controlling the purge valve. For instance, controlling the purge valve comprises controlling an amount of opening of the purge valve and/or controlling a duration of opening of the purge valve. With such a purge valve, the herein described method may be executed to adjustably control purging of the at least one electrode.

According to a further embodiment, the step of controlling the purge valve comprises a step of determining an amount of opening of the purge valve based on the determined pressure value. The amount of opening of the purge valve may be a relative degree of opening of the purge valve. For instance, as determined amount of opening of the purge valve, it may be determined, that the opening of the purge valve may be opened by 50% of its maximum opening. The step of controlling the purge valve may further comprise a step of determining a duration of opening of the purge valve based on the determined pressure value. The duration of opening of the purge valve may be in seconds. The step of determining the amount of opening and/or a duration of opening of the purge valve may also be based on an operating point of the fuel cell, for instance a voltage and/or a current drawn from the fuel cell, and/or an amount of water produced by the fuel cell, for instance determined via a simulation and/or a look up table. The step of controlling the purge valve may comprise controlling the purge valve based on the determined amount of opening and/or the determined duration of opening of the purge valve. The steps of determining the amount of opening of the purge valve and/or determining the duration of opening of the purge valve may be independent of fuel cell stack operating pressure, composition of purge gas at an anode outlet, estimated needed purge flow rate, concentration of hydrogen at the anode, and/or current drawn from the fuel cell. Being independent from these values may be defined as that there may be a correlation between these values and the determined amount of opening and/or of a duration of opening, but the steps of determining do not take these values explicitly into account. The steps of determining the amount of opening of the purge valve and/or determining the duration of opening of the purge valve may solely be performed when a high pressure drop purge is not executable and/or a low pressure drop purge is executable. Thus, performing a high pressure drop purge may be independent of specially determined amounts and/or durations of opening of the purge valve, thus those steps of determining amount and/or duration of opening of the purge valve may not be performed for a high pressure drop purge. A low pressure drop purge may thus be performed with the determined amount of opening and/or duration of opening of the purge valve.

According to a further embodiment, the step of determining the amount of opening of the purge valve comprises determining a large amount of opening with a larger pressure value. For instance, if a larger supply pressure value is determined, a larger or greater opening of the purge valve may be determined, for instance 80 to 100% of the amount of maximum opening of the purge valve. If a smaller supply pressure value is determined, a smaller amount of opening of the purge valve may be determined, for instance 10 to 40% of the maximum opening of the purge valve. Thus, a pressure within the fuel cell may be controlled, for instance said pressure may be kept at a constant or approximately constant level by determining the amount of opening the purge valve in direct correlation to the determined pressure value, for instance the supply pressure value.

According to a further embodiment, the step of determining the duration of the opening of the purge valve comprises determining a smaller duration of opening with a larger pressure value. For instance, if a larger pressure value is determined, the duration of opening the purge valve may be 2 seconds, wherein, if a smaller pressure value is determined, the duration of opening of the purge valve is determined to approximately 10 seconds. By this, the smaller the pressure value is, the longer the duration of opening of the purge valve may be determined and thus the longer the purging of the fuel cell and the purging of the electrode may be performed. Followingly, purging may be performed with different determined pressure values, including also small pressure values. The duration of the opening of the purge valve may thus correspond inversely to the determined pressure value.

According to a further embodiment, the method further comprises a step of determining a performance of the fuel cell prior to purging the electrode. The step of determining the performance of the fuel cell may be performed before controlling the purging device for purging the electrode. Furthermore, the step of controlling the purging device may be based on the determined performance. For instance, if a first performance is determined prior to purging, the step of controlling the purging device may be performed differently than when a second, different to the first performance is determined prior to purging. For instance, if a relatively high performance compared to comparable performances is determined, for instance saved as previously determined performances on the memory of the control unit, controlling the purging device may be performed such that the purging of the electrode and of the fuel cell may be performed rather efficiently without using too much of the supply gas for purging the electrode. In another case, when a relatively small performance of the fuel cell is determined prior to purging, controlling the purging device may be performed such that purging of the electrode and of the fuel cell may be performed with a relatively high amount of supply gas to ensure a thorough purging of the electrode. Thus, controlling the purging device and hence the purging of the electrode may be performed in dependence of the determined performance of the fuel cell prior to purging. Additionally, or alternatively, controlling the purging device may be based on a purge history. A purge history may comprise information about previous purges of the electrode. Information about previous purges may comprise information about previously determined pressure values, determined amounts of opening of the purge valve and/or determined durations of opening of the purge valve. With such a method, purging the fuel cell and the electrode may lead to an approximately constant value of performance after purging the electrode for different determined performances prior to purging the fuel cell.

According to a further embodiment, the step of determining the performance of the fuel cell comprises a step of determining an amount of water produced by the fuel cell. The amount of water may be an amount per time, thus a rate of water. The amount of water may be determined indirectly. For example, the amount of water may be estimated via temperatures, currents, simulations and/or a look up table. The step of controlling the purging device may be based on the determined amount of water. For instance, when a relatively small rate of water is determined, performance of the fuel cell is dropping, thus a thorough purging of the electrode is needed. Purging the fuel cell by controlling the purging device may be stopped when the determined amount of water is below or above a certain threshold. With such a step of determining the amount of water, the functional performance of the fuel cell may be determined. Thus, controlling the purging device may be directly based on the functional performance of the fuel cell.

According to a further embodiment, the method comprises further a step of determining a performance of the fuel cell after purging the electrode. For instance, the step of determining the performance of the fuel cell after purging may be done solely after a low pressure drop purge. For instance, the step of determining the performance of the fuel cell after purging the electrode may be performed by determining an amount and/or rate of water produced by the fuel cell. The method may further comprise a step of adjusting a power drawn from the fuel cell based on the determined performance. For instance, power drawn from the fuel cell may be reduced if the determined performance, determined after purging the electrode, is below a certain performance threshold. With such a method, controllable use of the fuel cell may even be provided when the purging of the fuel cell is not as successful as intended.

According to a further embodiment, controlling the purging device comprises controlling a pump of the purging device for recirculating at least part of the supply gas from an output of the fuel cell to an input of the fuel cell. With such a recirculation, consumption of supply gas for purging the fuel cell and the electrode may be reduced.

A second aspect of the invention relates to a system for purging the fuel cell. The system comprises a gas piping in fluid connection with the at least one electrode. The gas piping may comprise a gas supply, which may comprise a hydrogen storage device, a valve, and piping. The system further comprises a purging device for purging the at least one electrode. Furthermore, the system comprises a control unit. The control unit is configured for determining a pressure value of a gas at the gas piping. For instance, the control unit may comprise or may be communicatively connected to a sensor for determining the pressure value. Furthermore, the control unit is configured for controlling the purging device based on the determined pressure value. The control unit may be configured for executing any of the steps of the method according to any of the embodiments of the first aspect of the invention. Features described with respect to the first aspect may also apply to the second aspect and vice versa.

According to another embodiment, the purging device comprises a purge valve. The purge valve may be the purge valve as described according to an embodiment of the first aspect of the invention.

According to another embodiment, the system further comprises a pump. The pump may be part of the purging device. Furthermore, the system may comprise a recirculation path, wherein the recirculation path may be part of the purging device. The pump may be part of the recirculation path. The control unit may be configured for controlling the pump based on the determined pressure value and/or based on the operating point of the fuel cell, for instance a voltage and/or a current drawn from the fuel cell, and/or an amount of water produced by the fuel cell, for instance determined via a simulation and/or a look up table. By controlling the pump, at least part of the gas may be recirculated from an output of the anode to an input of the anode of the fuel cell. Controlling the pump may additionally be based on the step of controlling the purge valve. For instance, controlling the purge valve with a specific determined amount and duration of opening of the purge valve may lead to a specific controlling of the pump. Alternatively, or additionally, controlling the purge valve may be based on controlling the pump, for instance controlling the pump for providing a certain pressure may affect controlling the purge valve. For instance, the steps of determining the amount and/or the duration of opening of the purge valve may be based on the controlling of the pump.

A third aspect of the invention relates to a fuel cell. The fuel cell comprises at least one electrode. For instance, the fuel cell comprises exactly two electrodes, an anode and a cathode. The fuel cell further comprises a system according to an embodiment of the second aspect of the invention for purging the at least one electrode. Features described with respect to the first and/or second aspect may also apply to the third aspect and vice versa.

A fourth aspect of the invention relates to an energy supply device. The energy supply device comprises a fuel cell according to an embodiment of the third aspect of the invention. Furthermore, the energy supply device comprises a hydrogen storage device for supplying hydrogen to the fuel cell. The hydrogen storage device may supply hydrogen as fuel and/or as purging gas in the form of supply gas. Features described with respect to the first, second and/or third aspect may also apply to the fourth aspect and vice versa.

### Brief description of the drawings

- Fig. 1: shows schematically an energy supply device comprising a fuel cell and a hydrogen storage device.
- Fig. 2: shows schematically the fuel cell from Fig. 1 and a system for purging the fuel cell.
- Fig. 3: shows schematically steps of a method for purging the fuel cell of Fig. 1.

### Detailed description of embodiments

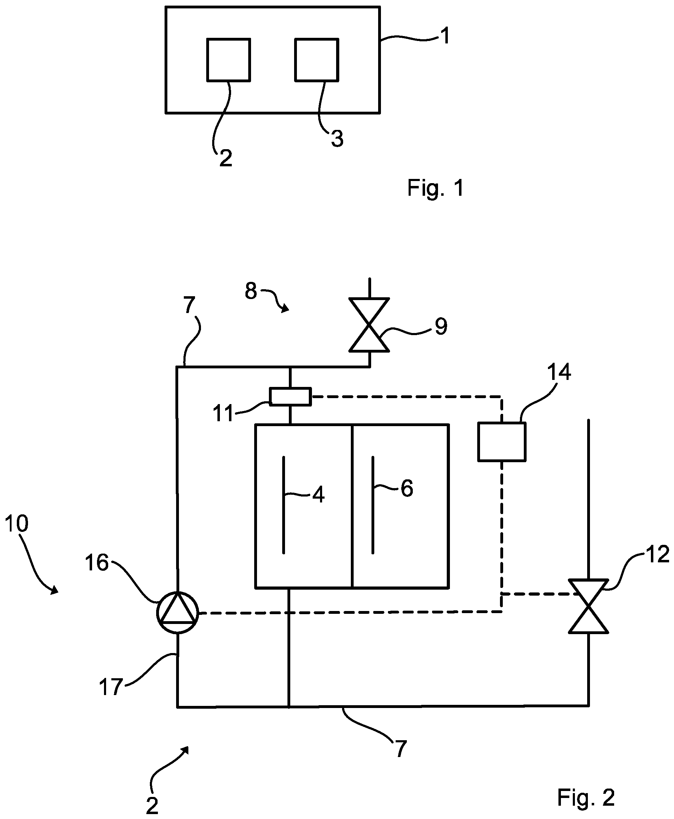

Fig. 1 shows schematically an energy supply device 1 comprising a fuel cell 2 and a hydrogen storage device 3. The hydrogen storage device 3 may store hydrogen for supplying hydrogen to the fuel cell 2. The hydrogen storage device 3 and the fuel cell 2 may be connected, for instance fluidly and/or communicatively connected. The energy supply device 1 may be mobile or stationary. For instance, the energy supply device 1 may be part of a vehicle. Alternatively, the energy supply device 1 may be part of a stationary energy power plant and/or energy storage facility.

Fig. 2 shows schematically the fuel cell 2 of Fig. 1. The fuel cell 2 comprises two electrodes, a first electrode 4 as anode and a second electrode 6 as cathode. The first electrode 4 is located within an anode side of the fuel cell 2, and the second electrode 6 is located within a cathode side of the fuel cell 2. Fig. 2 further shows a system for purging the fuel cell 2. The system shown in Fig. 2 is part of the fuel cell 2. In an alternative embodiment, the system is separate from the fuel cell. The system comprises a gas piping 7 with a gas supply 8, a purging device 10 and a control unit 14.

The gas piping 7 is in fluid connection with the at least one electrode. The gas piping 7 may be configured for supplying gas to the at least one electrode 4, 6 and for receiving gas from the at least one electrode 4,6. The gas piping 7 fluidly connects the at least one electrode 4, 6, e.g. the anode side of the fuel cell 2, with other elements of the fuel cell 2. The gas supply 8 comprises piping and a supply valve 9. The gas supply 8 provides a fluid connection from the hydrogen storage device 3, not explicitly shown in Fig. 2, via the supply valve 9 to an input of the anode side of the fuel cell 2. In an alternative embodiment, the gas supply comprises the hydrogen storage device. The gas supply 8 supplies the fuel cell 2, especially the anode side of the fuel cell 2, with hydrogen as supply gas. In Fig. 2, fluid connections are depicted as solid lines.

The purging device 10 comprises piping, a purge valve 12, and a recirculation path 17, which comprises a pump 16. An output of the anode side of the fuel cell 2 is fluidly connected to the purge valve 12. The output of the anode side of the fuel cell 2 is furthermore fluidly connected to the input of the anode side of the fuel cell 2, wherein this fluid connection is part of the recirculation path 17. The pump 16 is part of the recirculation path 17 and the pump 16 recirculates fluid from the output of the anode side of the fuel cell 2 to the input of the anode side of the fuel cell 2.

The system further comprises a sensor 11. The sensor 11 is a pressure sensor and is located in the fluid connection between the supply valve 9 and the input of the anode side of the fuel cell 2. In an alternative embodiment, which is not shown, the sensor 11 is located at another location of the gas piping 7, for instance downstream of the output of the anode side of the fuel cell 2 or upstream of the input of the anode side and/or within the gas supply 8, for instance downstream or upstream of the supply valve 9. The sensor 11 is configured for measuring pressure at the input of the anode side of the fuel cell 2.

The control unit 14, the sensor 11, and the pump 16 are communicatively coupled, for instance via wired or wireless data communication channels, such as ethernet or WIFI. This communicative connection is schematically shown in Fig. 2 as dashed lines. Additionally, the supply valve 9 may also be communicatively coupled to the control unit 14. Signals, such as sensing signals or controlling signals, may be transmitted between the control unit 14, the sensor 11, the pump 16, and/or the supply valve 9.

In an alternative embodiment, an input and an output of the cathode side of the fuel cell are also and analogously fluidly connected as the input and output of the anode side of the fuel cell 2 shown in Fig. 2. In an alternative embodiment, only the cathode side of the fuel cell is fluidly connected as is the anode side as shown in Fig. 2. In an alternative embodiment, recirculation of the cathode side of the fuel cell 2 is done via membranes. However, in the embodiment shown in Fig. 2, only the anode side of the fuel cell 2 is connected, the cathode side is not recirculated at all, and the further detailed description will be referring to such an embodiment.

The system is configured for purging the fuel cell 2. In detail, the purging device 10 is configured for purging at least one electrode 4, which is the anode in the described and shown embodiment.

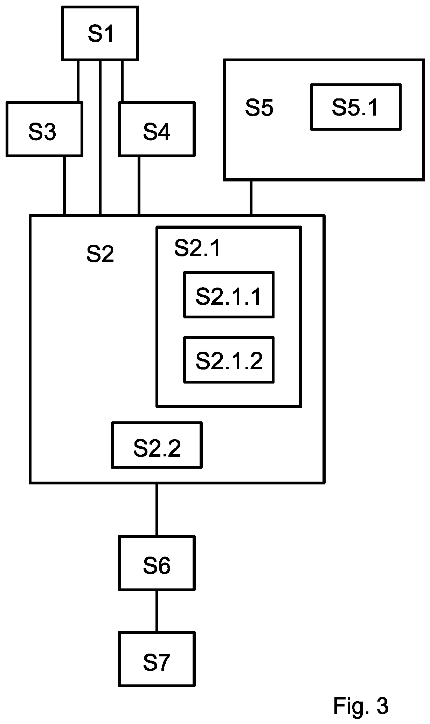

Fig. 3 shows schematically steps for a method for purging the fuel cell 2. The control unit 14 is configured for determining S1 a pressure value of at the gas piping 7, for instance and as shown in Fig. 2, for determining S1 a supply pressure value of supply gas from the hydrogen storage device 3 at the gas supply 8. The step of determining S1 is performed by means of the sensor 11, wherein the sensor 11 measures a pressure value at the input of the anode side of the fuel cell 2 and sends the measured pressure value to the control unit 14 for determining S1. The sensor 11 may work either directly or indirectly. Thus, the step of determining S1 may also include or be a step of reading a measured pressure value.

The control unit 14 is configured for controlling S2 the purging device 10 based on the determined pressure value. Based on the determined pressure value, the purging device 10 may be controlled differently for different determined pressure values.

Furthermore, the control unit 14 is configured for comparing S3 the determined pressure value with an absolute and predefined pressure threshold. The pressure threshold may be a function and may be dependent on a current drawn from the fuel cell 2. The function may be variable, predefined and/or continuous. Alternatively, the pressure threshold may be a fixed threshold value. Furthermore, the step of controlling S2 the purging device 10 is based on this comparison. For instance, if the determined pressure value is above the predefined pressure threshold, a high pressure drop purge may be executable. Otherwise, a low pressure drop purge may be executable and a high pressure drop purge may not be executable. Thus, during controlling S2 the purging device 10, such a high or low pressure drop purge may be executed.

Furthermore, the step of determining S1 the pressure value comprises several steps of determining S1 pressure values at different times. The control unit 14 is further configured for comparing S4 at least two or more pressure values determined at at least two or more different times. The step of controlling S2 the purging device 10 comprises controlling S2 the purging device 10 based on this comparison. By this, a relative change of the determined pressure value may be determined and controlling S2 the purging device 10 may be based on this relative pressure value drop, for instance a supply pressure drop or pressure drop in gas piping downstream of the electrode.

In one embodiment, either the step of comparing S3 with the pressure threshold or the step of comparing S4 at least two pressure values determined at at least two or more different times is executed. In one embodiment, both steps S3 and S4 are executed, while a result of one step of comparing S3 is controlled with another result of the other step of comparing S4. For instance, both steps of comparing S3 and S4 have as result that a high pressure drop purge is not executable, and thus it may be verified that a high pressure drop purge is not executable, and a low pressure drop purge should be executed instead. The combination of the result of both steps of comparing S3, S4 may be via a function in such an embodiment.

Controlling S2 the purging device 10 comprises controlling S2.1 the purge valve 12. Controlling S2.1 the purge valve 12 comprises a step of determining S2.1.1 an amount of opening of the purge valve 12 based on the determined pressure value. Determining S2.1.1 the amount of opening of the purge valve 12 comprises determining S2.1.1 a large amount of opening with a larger determined pressure value. Furthermore, the step of controlling S2.1 the purge valve 12 comprises a step of determining S2.1.2 a duration of opening of the purge valve 12 based on the determined pressure value. The step of determining S2.1.2 the duration of opening of the purge valve 12 comprises determining S2.1.2 a smaller duration of opening with a larger determined pressure value. The step of determining S2.1.1 the amount of opening and/or the step of determining S2.1.2 a duration of opening of the purge valve 12 may also be based on an operating point of the fuel cell 2, for instance a voltage and/or a current drawn from the fuel cell 2, and/or an amount of water produced by the fuel cell 2, for instance determined via a simulation and/or a look up table.

Furthermore, the step of controlling S2.1 the purge valve 12 comprises controlling S2.1 the purge valve 12 based on the determined amount of opening and/or the determined duration of opening of the purge valve 12. In one embodiment, only the amount of opening of the purge valve 12 is determined, wherein in another embodiment, only the duration of opening of the purge valve is determined. In another embodiment, both the amount of opening and the duration of opening of the purge valve is determined. The step of controlling S2.1 the purge valve 12 may be based on any combination of determined amount and/or duration of opening of the purge valve 12.

Furthermore, the control unit 14 is configured for controlling S2.2 the pump 16 based on the determined pressure value. Alternatively, the pump 16 may be set at a fixed pressure value. The pump 16 pumps hydrogen, which exits the output of the anode side of the fuel cell 2, to the input of the anode side of the fuel cell 2. The pump 16 is controlled based on the determined pressure value. For instance, if the determined supply pressure value is low, the pump 16 is controlled such that the pump 16 provides a lower pressure than when the determined supply pressure value is high. With this recirculation of hydrogen, hydrogen for purging is saved.

The control unit 14 is further configured for determining S5 a performance of the fuel cell 2 prior to purging the electrode 4. The step of determining S5 the performance of the fuel cell 2 comprises a step of determining S5.1 an amount of water produced by the fuel cell 2. In the embodiment, the amount of water produced by the anode side of the fuel cell 2 is estimated indirectly via a look up table and thus determined. Water may comprise water vapour. The step of controlling S2 the purging device 10 is based on the determined performance, which is determined prior to controlling S2 the purging device 10 for purging the electrode 4. Thus, the step of controlling S2 the purging device 10 is based on the determined amount of water.

Furthermore, the control unit 14 is configured for determining S6 a performance of the fuel cell 2 after purging the electrode 4. This determining S6 may be done by determining an amount and/or rate of water produced by the anode side of the fuel cell 2. Water may comprise water vapour. Alternatively, or additionally, determining S6 may be done by means of a power meter, which is not explicitly shown. The control unit 14 is further configured for adjusting S7 a power drawn from the fuel cell 2 based on the determined performance, wherein the performance is the performance determined after purging. For instance, a current drawn from the fuel cell 2 may be adjusted. For instance, if the determined performance of the fuel cell 2 after purging is less than a threshold, the current drawn from the fuel cell 2 may be limited to a certain limit, for instance 10, 20, 30, 40, 50, 60, 70, 80, or 90 % of the maximum power, which can be drawn from the fuel cell 2. Thus, the power drawn may be adjusted to the actual performance of the fuel cell 2 achieved after and by purging the fuel cell 2.

The steps of the method as described above and as schematically depicted in Fig. 3 may be executed in any alternative order which may also achieve the described effects. For instance, comparing S3 the determined pressure value with a pressure threshold and comparing S4 two pressure values determined at two different times may be executed in any order. The two steps S3, S4 may be executed independently from each other. The steps S3 to S7 may be performed additionally to the steps S1 and S2 depending on the embodiment.

The steps of the method as described above and as schematically depicted in Fig. 3 may be executed cyclically. For instance, all or at least some steps of the method may be executed in each cycle of the control unit 14. For instance, at the beginning of a cycle n, the method may start by executing steps S1 and S5, which may be executed independently from each other. Then, the further steps may be executed as schematically depicted in Fig. 3. At the end of the cycle, step S7 may be executed. In cycle n+1, all or at least some of the steps of the method may be executed again, for instance starting with steps S1 and/or S5.

### Reference signs

- 1: energy supply device
- 2: fuel cell
- 3: hydrogen storage device
- 4, 6: electrode
- 7: gas piping
- 8: gas supply
- 9: supply valve
- 10: purging device
- 11: sensor
- 12: purge valve
- 14: control unit
- 16: pump
- 17: recirculation path
- S1: determining a pressure value
- S2: controlling the purging device
- S2.1: controlling the purge valve
- S2.1.1: determining an amount of opening of the purge valve
- S2.1.2: determining a duration of opening of the purge valve
- S2.2: controlling the pump
- S3: comparing the determined pressure value with a pressure threshold
- S4: comparing two pressure values determined at two different times
- S5: determining a performance of the fuel cell
- S5.1: determining an amount of water produced by the fuel cell
- S6: determining a performance of the fuel cell after purging the electrode
- S7: adjusting a power drawn from the fuel cell

## Claims

1. Method for purging a fuel cell (2) comprising at least one electrode (4; 6), a gas piping (7) in fluid connection with the at least one electrode (4; 6) and a purging device (10) for purging the at least one electrode (4; 6), including the steps:
determining (S1) a pressure value of a gas at the gas piping (7); and
controlling (S2) the purging device (10) based on the determined pressure value.

2. Method according to claim 1, further comprising comparing (S3) the determined pressure value with a pressure threshold and wherein controlling (S2) the purging device (10) is based on this comparison.

3. Method according to any of the preceding claims, wherein determining (S1) the pressure value comprises determining (S1) pressure values at two different times, wherein the method further comprises comparing (S4) the two pressure values determined at the two different times, and wherein controlling (S2) the purging device (10) comprises controlling (S2) the purging device (10) based on this comparison.

4. Method according to any of the preceding claims, wherein the purging device (10) comprises a purge valve (12) and wherein controlling (S2) the purging device (10) comprises controlling (S2.1) the purge valve (12).

5. Method according to claim 4, wherein controlling (S2.1) the purge valve (12) comprises:
determining (S2.1.1) an amount of opening of the purge valve (12) based on the determined pressure value; and/or
determining (S2.1 .2) a duration of opening of the purge valve (12) based on the determined pressure value; and
wherein controlling (S2.1) the purge valve (12) comprises controlling (S2.1) the purge valve (12) based on the determined amount of opening and/or the determined duration of opening of the purge valve (12).

6. Method according to claim 5, wherein determining (S2.1 .1) the amount of opening of the purge valve (12) comprises determining (S2.1.1) a larger amount of opening with a larger pressure value.

7. Method according to any of claims 5 or 6, wherein determining (S2.1.2) the duration of opening of the purge valve (12) comprises determining (S2.1.2) a smaller duration of opening with a larger pressure value.

8. Method according to any of the preceding claims, further comprising:
determining (S5) a performance of the fuel cell (2) prior to purging of the electrode (4; 6); and
controlling (S2) the purging device (10) based on the determined performance.

9. Method according to claim 8, wherein determining (S5) the performance of the fuel cell (2) comprises:
determining (S5.1) an amount of water produced by the fuel cell (2); and
controlling (S2) the purging device (10) based on the determined amount of water.

10. Method according to any of the preceding claims, further comprising:
determining (S6) a performance of the fuel cell (2) after purging the electrode (4; 6); and
adjusting (S7) a power drawn from the fuel cell (2) based on the determined performance.

11. System for purging a fuel cell (2), comprising:
a gas piping (7) in fluid connection with the at least one electrode (4; 6);
a purging device (10) for purging the at least one electrode (4; 6); and
a control unit (14), which is configured for determining (S1) a pressure value of a gas at the gas piping (7) and for controlling (S2) the purging device (10) based on the determined pressure value according to the method of one of claims 1 to 10.

12. System according to claim 11, wherein the purging device (10) comprises a purge valve (12).

13. System according to claim 12, further comprising a pump (16), wherein the control unit (14) is configured for controlling (S2.2) the pump (16) based on the determined pressure value.

14. Fuel cell (2) comprising at least one electrode (4; 6) and a system according to any of claims 11 to 13 for purging the at least one electrode (4; 6).

15. Energy supply device (1) comprising a fuel cell (2) according to claim 14 and a hydrogen storage device (3) for supplying hydrogen to the fuel cell (2).
